# DEMANDE DE BREVET EUROPEEN

(11) **EP 1 785 292 A1**
(43) Date de publication de la demande: **16.05.2007**
(21) Numéro de dépôt: 06300948.4
(22) Date de dépôt: 13.09.2006
(51) Int. Cl.: B60G 21/05, B60G 9/04, F16B 2/22, B60R 16/00

(54) **Dispositif de maintien sur une traverse du train d'un véhicule**

(30) Priorité: 09.11.2005 FR 0553390
(71) Demandeur: Renault s.a.s., 92100 Boulogne Billancourt (FR)
(72) Inventeur: Fauqueux, Olivier, 78300 Poissy (FR); Badji, Lini, 75013 PARIS (FR)

(57) **Abrégé**

Dispositif de maintien d'un élément (A) sur une traverse (1) du train d'un véhicule automobile, dans lequel ledit élément (A) est maintenu sur ladite traverse (1) au moyen d'un ensemble de fixation (5, 6) approprié, caractérisé en ce que ledit ensemble de fixation (5, 6) approprié est placé sur un collier (3) emboîté autour de ladite traverse (1).

## Description

La présente invention se rapporte au domaine des trains arrière de véhicules automobiles comportant au moins une traverse à profil fermé, et concerne plus particulièrement la fixation d'éléments sur de telles traverses.

En effet, pour des raisons d'étanchéité, il est préférable de ne pas percer de telles traverses pour y fixer des éléments tels que, par exemple, des pattes d'accrochage de rigides de frein, des câbles électriques, ou le carénage plastique du train. De plus, la fixation par soudure est également difficile, ces traverses étant généralement trempées.

Actuellement, les véhicules équipés de trains arrière comportant des traverses à profil fermé ne sont, généralement, pas équipés de carénage, et les rigides de frein sont généralement disposés sur les bras du train et repris sur la caisse du véhicule.

Certains constructeurs proposent toutefois la mise en place d'un câble rigide de frein le long d'une traverse à profil fermé, dans laquelle ledit rigide de frein est maintenu par un ensemble d'éléments appropriés réalisés en plastique et régulièrement répartis le long de la traverse, chacun des éléments étant vissé sur un goujon soudé dans le profil de cette traverse. Un tel dispositif implique toutefois la réalisation d'un certain nombre de points de soudure le long de la traverse, ce qui, compte tenu du mode de fabrication de ladite traverse, ainsi qu'il a été précédemment mentionné, peut s'avérer difficile et coûteux. Un tel dispositif implique également la possibilité d'une amorce de fissuration au niveau des soudures en cours d'utilisation du véhicule.

La présente invention a pour but de proposer un dispositif simple et peu coûteux permettant la fixation d'éléments tels que câbles électriques, rigides de frein, ou carénage plastique, sur une traverse d'un train d'un véhicule automobile.

L'invention atteint son but grâce à un dispositif de maintien d'un élément sur une traverse du train d'un véhicule automobile, dans lequel ledit élément est maintenu sur ladite traverse au moyen d'un ensemble de fixation approprié, caractérisé en ce que ledit ensemble de fixation approprié est placé sur un collier emboîté autour de ladite traverse.

Avantageusement, ledit collier est réalisé en matière plastique et selon les cas, sa forme intérieure/extérieure est sensiblement complémentaire de la forme de la section extérieure/intérieure de ladite traverse.

Avantageusement, ledit collier comporte un ensemble d'orifices régulièrement répartis sur sa surface, et destinés à accueillir les pièces d'un ensemble de fixation apte au maintien de l'élément tel que rigide de frein, câble électrique, ou carénage d'essieu destiné à être placé sur la traverse.

Les extrémités du collier sont également avantageusement formées de manière à faciliter le montage et le maintien dudit collier sur ladite traverse.

Dans un mode de réalisation préféré de l'invention, dans lequel la section de la traverse forme sensiblement un U, le collier est emboîté autour de la surface extérieure dudit U.

Selon différents modes de réalisation de l'invention et en fonction des dimensions de l'élément à fixer sur la traverse, un ou plusieurs colliers peuvent être placés sur ladite traverse.

D'autres caractéristiques et avantages de l'invention ressortiront à la lecture de la description qui suit, en référence aux figures annexées dans lesquelles :
- la figure 1 est une vue schématique en coupe d'un premier mode de réalisation d'un dispositif de fixation selon l'invention,
- la figure 2 est une vue schématique en coupe d'un deuxième mode de réalisation d'un dispositif de fixation selon l'invention,
- la figure 3 est une vue schématique en coupe d'un détail d'une extrémité du collier d'un dispositif de fixation selon l'invention,
- la figure 4 est une vue schématique en coupe d'une variante de réalisation d'un dispositif de fixation selon l'invention.

La description qui suit se rapporte à la mise en oeuvre de l'invention, sur le train arrière d'un véhicule automobile comportant une traverse 1 à profil fermé, dont la section a sensiblement la forme d'un U dont les extrémités 1' et 1" des deux branches forment deux cavités creuses 2 et 2', l'épaisseur des extrémités 1' et 1" étant supérieure à l'épaisseur de la partie centrale de la traverse 1. Il est toutefois à noter que les caractéristiques de l'invention, décrites par rapport à ce mode de mise en oeuvre particulier, sont générales, et que l'invention s'applique également pour des formes différentes de profils de la traverse 1, notamment si les extrémités 1' et 1" ne sont pas creuses.

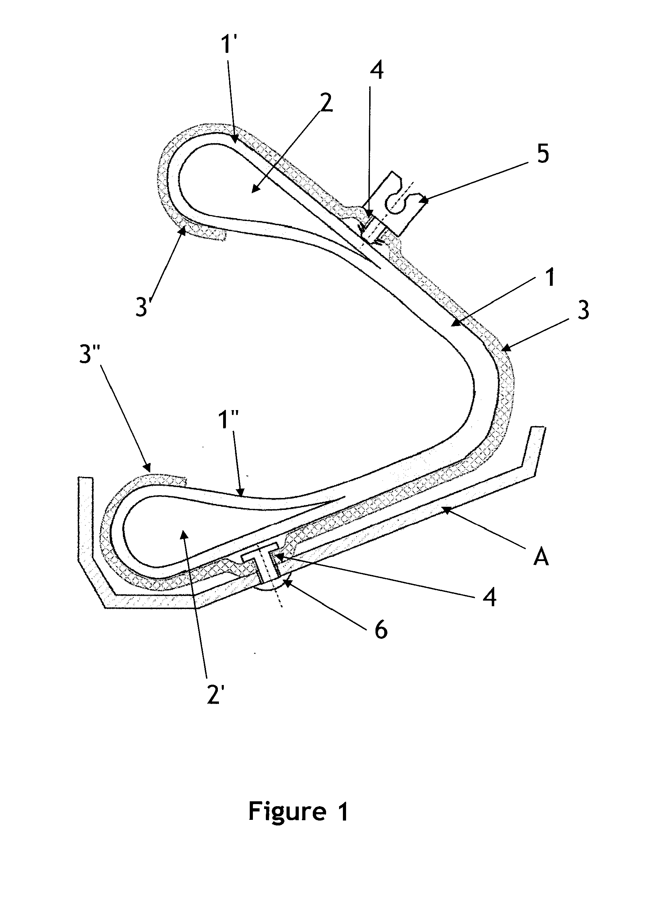

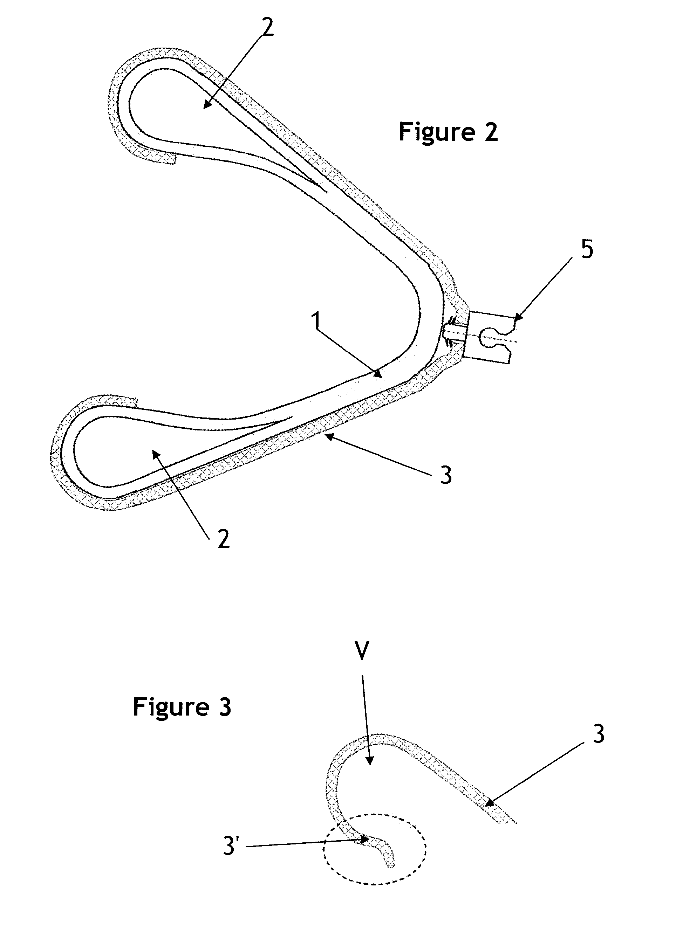

Le dispositif selon l'invention propose d'emboîter, autour d'une partie convexe de la traverse 1 (ici la surface extérieure du U formé par ladite traverse 1), un collier 3, de préférence réalisé en matériau plastique, dont la forme est sensiblement complémentaire de celle de la traverse 1. Tel que représenté sur les figures, le collier 3 peut présenter une forme et des dimensions telles que ce collier 3 vient en appui contre la surface extérieure de la traverse. Les passages qui vont suivre, les figures associées, et notamment concernant la forme des extrémités 3' et 3" recourbées du collier 3, correspondent à une telle mise en place du collier 3. Toutefois, il sera compris que, sans sortir du contexte de l'invention, le collier 3 peut être plaqué contre la surface intérieure de la traverse 1, la forme des extrémités du collier devant alors être orientées inversement pour permettre la fixation du collier 3 autour des extrémités de la traverse 1.
Ainsi, dans le mode de réalisation présenté par les figures, les extrémités 3' et 3" du collier 3 sont recourbées vers l'intérieur de sorte que le collier puisse être d'une part en appui contre la surface extérieure de la traverse 1, et dans le même temps être emboîté sur les extrémités 1' et 1" de la traverse 1 (voir les figures 1 et 2). Avantageusement, les extrémités 3' et 3" du collier 3 sont formées de manière à faciliter l'emboîtement du collier 3 sur les extrémités 1' et 1" de la traverse 1 : dans le mode de réalisation présenté par les figures (voir en particulier la figure 3), chaque extrémité 3' et 3" prolonge la partie centrale du collier 3 par une première partie recourbée vers l'intérieur, apte à entourer une extrémité correspondante 1' et 1" de la traverse 1, puis par une seconde partie radiale de sorte que ces secondes parties radiales des extrémités du collier sont orientées l'une vers l'autre. Cette orientation, dans le cadre d'une mise en place du collier 3 contre la face extérieure de la traverse 1, permet de décoller de la traverse 1 les extrémités 3' et 3" du collier 3, de manière à rendre plus aisée la préhension et la mise en place dudit collier 3 sur la traverse 1.

Dans une première variante, présentée par la figure 1, du mode de réalisation préféré de l'invention présenté par les figures, le collier 3 est percé, à intervalles réguliers situés sur sa partie en contact avec les branches du U formant la traverse 1, d'orifices 4 aptes à accueillir des éléments appropriés à la fixation de l'élément A. Ainsi, selon la nature de l'élément A à fixer sur la traverse 1 (câble électrique, rigide de frein, carénage, d'essieu, etc ...), lesdits orifices 4 pourront accueillir des pattes de fixation standard 5, par exemple insérées et maintenues par clipsage dans les orifices 4, ou des vis de fixation 6 (par exemple pour la mise en place et le maintien d'un carénage d'essieu ainsi que le présente la figure 1).

Dans une deuxième variante, présentée par la figure 2, du mode de réalisation préféré de l'invention présenté par les figures, les orifices 4 sont percés sur la partie du collier 3 placée au contact de la partie centrale du U formant la traverse 1, l'élément de fixation (ici une patte de fixation 5, par exemple) étant alors placé sur la partie saillante de la traverse 1.

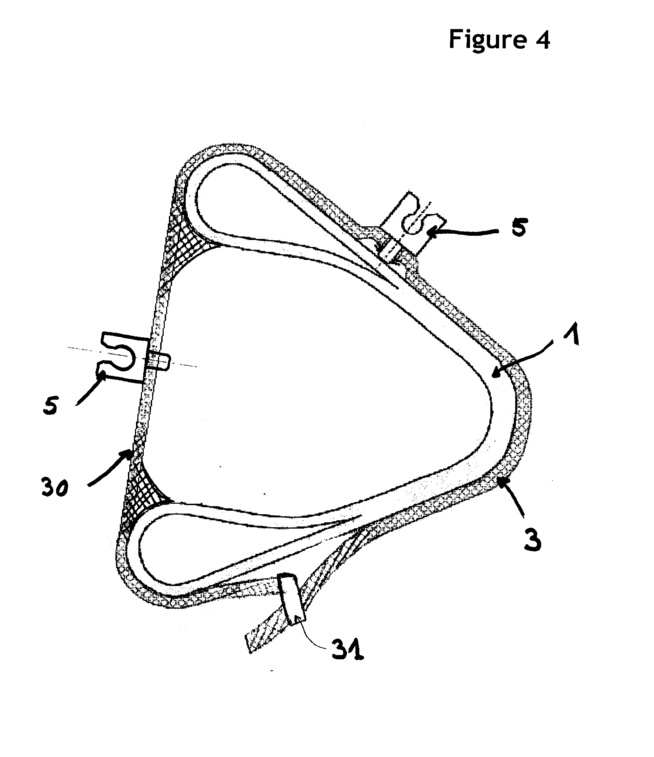

Une variante de réalisation est représentée à la figure 4, dans laquelle une sangle 30 entoure la traverse 1 dans son ensemble. Un moyen connu d'anti-retour 31 permet le serrage autour de la traverse 1 du collier formé par la sangle 30. En outre, la sangle 30 présente des moyens d'indexage 32, formés dans cet exemple par une surépaisseur de ladite sangle, qui assurent l'emboîtement autour des extrémités 1' et 1" de la traverse 1, et qui permettent d'empêcher la rotation du collier 3 autour de la traverse 1. Une patte de fixation 5 permettant le montage d'un élément de fixation A peut alors être positionnée sur la sangle, et peut ainsi être positionnée entre les deux extrémités 1' et 1" de la traverse 1, notamment à la verticale de ces deux extrémités de la traverse 1.

Il est à noter que, si un seul collier 3 a été décrit ici, le dispositif selon l'invention peut comporter plusieurs colliers 3 de largeur appropriée uniformément répartis sur la longueur de la traverse 1. Il est toutefois envisageable, selon la forme et les dimensions de l'élément A à fixer, que le dispositif de fixation selon l'invention comporte un seul collier 3 de largeur suffisante pour permettre la fixation et le maintien en place dudit élément A.

Dans la mesure ou plusieurs colliers 3 sont disposés le long de la traverse 1, un système peut être prévu afin de garantir le respect d'une distance entre plusieurs colliers 3, que ce soit au moment de la pose ou en cours de vie du véhicule. Plusieurs colliers 3 peuvent ainsi être liés à une tige et sont répartis sur la longueur de cette tige, garantissant ainsi la distance entre chaque collier. Un trou ou un pion de centrage réalisé sur la tige permet de garantir le positionnement des colliers 3 le long de la traverse 1 de l'essieu, par exemple à l'aide d'une forme complémentaire réalisée sur l'essieu. Une telle tige peut être utilisé également dans le cas de sangles 30 formant lesdits colliers 3.

L'invention permet ainsi, grâce à un dispositif simple, de mettre en place et de fixer, sur une traverse à profil fermé du train d'un véhicule automobile, un élément tel qu'un câble électrique, un rigide de frein, ou un carénage d'essieu, sans nécessité de percer la traverse ou de réaliser des soudures complexes et coûteuses. Le collier du dispositif selon les différents modes de réalisation de l'invention, réalisé dans un matériau plastique, est d'un coût peu élevé, et les moyens de fixation utilisés étant des moyens standards, le coût global d'une telle solution reste faible.

## Revendications

1. Dispositif de maintien d'un élément (A) sur une traverse (1) du train d'un véhicule automobile, dans lequel ledit élément (A) est maintenu sur ladite traverse (1) au moyen d'un ensemble de fixation (5, 6) approprié, **caractérisé en ce que** ledit ensemble de fixation (5, 6) approprié est placé sur un collier (3) emboîté autour de ladite traverse (1).

2. Dispositif selon la revendication 1, **caractérisé en ce que** la forme intérieure du collier (3) est complémentaire de la forme extérieure de la traverse (1).

3. Dispositif selon la revendication 1, **caractérisé en ce que** la forme extérieure du collier (3) est complémentaire de la forme intérieure de la traverse (1).

4. Dispositif selon l'une des revendications précédentes, **caractérisé en ce que** les extrémités (3') et (3") du collier (3) sont sensiblement recourbées de sorte que chaque extrémité (3') et (3") du collier (3) s'emboîte autour d'une extrémité correspondante (1') et (1") de la traverse (1).

5. Dispositif selon l'une quelconque des revendications 1 à 4, **caractérisé en ce que** le collier (3) est percé d'au moins un orifice (4) apte à accueillir des éléments (5), (6) permettant la fixation de l'élément (A).

6. Dispositif selon la revendication 5, dans lequel la section de la traverse (1) forme sensiblement un U et dans lequel le collier (3) est emboîté autour de la surface extérieure dudit U, **caractérisé en ce que** les orifices (4) sont placés sur les parties du collier (3) en contact avec la partie extérieure des branches du U formant la traverse (1).

7. Dispositif selon la revendication 5, dans lequel la section de la traverse (1) forme sensiblement un U et dans lequel le collier (3) est emboîté autour de la surface extérieure dudit U, **caractérisé en ce que** les orifices (4) sont placés sur la partie du collier (3) au contact de la partie centrale du U formant la traverse (1), reliant entre elles les branches dudit U.

8. Dispositif selon l'une quelconque des revendications 1 à 7, **caractérisé en ce que** plusieurs colliers (3) sont régulièrement répartis le long de la traverse (1).

9. Dispositif selon l'une quelconque des revendications 1 à 7, **caractérisé en ce qu'**un seul collier (3) est placé autour de ladite au moins une partie convexe de la traverse (1).

10. Véhicule automobile dont un train comporte au moins une traverse (1), **caractérisé en ce qu'**au moins un élément (A) est fixé sur la traverse (1) par un dispositif selon l'une quelconque des revendications 1 à 9.
